(19) Europäisches Patentamt
European Patent Office
Office européen des brevets

(11) EP 4 581 213 B1

(12) **EUROPEAN PATENT SPECIFICATION**

(45) Date of publication and mention of the grant of the patent:
**13.05.2026 Bulletin 2026/20**

(21) Application number: **23805354.0**

(22) Date of filing: **12.10.2023**

(51) International Patent Classification (IPC):
***E01C 7/36*** (2006.01) ***E01C 21/00*** (2006.01)
***C04B 26/28*** (2006.01) ***C04B 30/00*** (2006.01)
***C04B 111/00*** (2006.01) ***C09K 17/32*** (2006.01)

(52) Cooperative Patent Classification (CPC):
(C-Sets available)
**E01C 21/00; C04B 26/285; C04B 30/00; C09K 17/32; E01C 7/36;** C04B 2111/0075 (Cont.)

(86) International application number:
**PCT/US2023/076640**

(87) International publication number:
**WO 2024/097517 (10.05.2024 Gazette 2024/19)**

(54) **PROCESS TO STABILIZE UNPAVED ROADS**

VERFAHREN ZUR STABILISIERUNG VON UNGEPFLASTERTEN STRASSEN

PROCÉDÉ DE STABILISATION DE ROUTES NON PAVÉES

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **31.10.2022 US 202263420843 P**

(43) Date of publication of application:
**09.07.2025 Bulletin 2025/28**

(73) Proprietors:
- **Dow Global Technologies LLC**
  **Midland, MI 48674 (US)**
- **Rohm and Haas Company**
  **Collegeville, PA 19426 (US)**

(72) Inventors:
- **FAN, Yi**
  **Lake Jackson, Texas 77566 (US)**
- **RADLER, Michael J.**
  **Midland, Michigan 48667 (US)**
- **LEVIN, Jessica R.**
  **Collegeville, Pennsylvania 19426 (US)**
- **THEUERKAUF, Jorg**
  **Midland, Michigan 48667 (US)**

(74) Representative: **Beck Greener LLP**
**Fulwood House**
**12 Fulwood Place**
**London WC1V 6HR (GB)**

(56) References cited:
**WO-A1-2013/074296**
**JP-A- S53 145 312**
**US-A1- 2006 128 838**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C04B 26/285, C04B 14/361, C04B 14/06;**
**C04B 30/00, C04B 24/383, C04B 14/361,**
**C04B 14/06**

## Description

FIELD

This invention relates to the art of road building.

INTRODUCTION

Roughly half the roads in the US are unpaved, and the proportion of unpaved roads are even higher in other countries. Unpaved roads are typically surfaced with soil or aggregate, which a blend of rock particles of different sizes down to sand.

Creation of unpaved roads often involves the steps of: (1) clearing and grading the roadway to create the desired cross-section, and adding ditches and culverts to manage water; (2) applying loose road material (soil or aggregate) in one or more layers; (3) leveling and grading each layer of loose road material after it is applied; and (4) compacting the road material, either at the end or layer by layer. In some cases, the road is constructed in two or more layers of aggregate, with one or more base layers of larger aggregate topped with one or more layers of smaller aggregate at the surface. In some cases, the road is further stabilized by chemical methods, most typically with cement and/or lime. WO 2013/074296 A1 discloses CMC/HEC blends for cement slurries. JP S53 145312 A discloses a bentonite-based ground stabilization liquid containing non-ionic cellulose ether soluble in water.

Maintenance of unpaved roads involves similar steps. Ditches and culverts are maintained to ensure adequate water drainage. A fresh surface of loose road material is provided by: (1) scarifying (breaking up and turning up) the existing surface to eliminate ruts, vegetation, and other unevenness; and/or (2) adding a fresh layer of loose road material; (3) leveling and grading each layer of loose road material after it is applied; and (4) compacting the road material, either at the end or layer by layer. Optionally, the road can again be stabilized by chemical methods.

Construction and maintenance procedures for unpaved roads are described in many publications, such as "Gravel Roads Construction and Maintenance Guide (August 2015)", FHWA Publication No.: FHWA-OTS- 15-0002 published by the Federal Highway Administration of the US Department of Transportation; and "Dirt and Gravel Road Best Management Practices (2019)" published by the Culpeper Soil and Water Conservation District of Culpeper, VA. Other publications include US 2006/128838 A1 which discloses a process for the stabilization of dusting surfaces.

Proper compaction of road material is an important step in construction and maintenance. Compaction stabilizes the road, making the various layers more resistant to vehicle traffic and erosion. Improved stability resulting from compaction also reduces the level of dust produced by traffic on the road.

It is known to spray water on loose road material to aid compaction. In addition, various chemical additives can be added to water and sprayed on unpaved roads to assist with stabilization and dust control. Magnesium chloride and calcium chloride draw moisture from the air to keep the road slightly damp. Lignin sulfate, clay, vegetable oils or latex can help particles of road material to adhere to each other, stabilizing them and reducing dust. Portland cement can be mixed into a layer of road material to stabilize it.

Alternate methods are needed to improve compacting and therefore ultimately stabilizing the road material using inexpensive and environmentally benign ingredients.

SUMMARY

One aspect of the present invention is a process to stabilize a layer of soil or aggregate, called "road material", in an unpaved road, comprising the steps of:

a) providing an unpaved road that contains a layer of loose road material, wherein the layer of loose road material further contains (1) a water-soluble nonionic cellulose ether in a quantity of at least 0.05 weight percent, based on the weight of road material in the layer excluding water, and (2) water;
b) compacting the layer of loose road material containing the cellulose ether and water.

A second aspect of the present invention is a road comprising a layer of soil or aggregate, called "road material", which contains at least 0.025 weight percent of a water-soluble nonionic cellulose ether, based on the weight of solids in the layer of road material, excluding water.

We have discovered that water-soluble nonionic cellulose ether aids in the compaction of road material, improving their stability. Without intending to be bound, we hypothesize that the cellulose ether temporarily reduces friction between particles of the road material, allowing them to compact better and provide a firmer surface. The cellulose ether is water-soluble and biodegradable, so that later it can wash away and/or be digested by microbes, leaving the particles compacted but no longer lubricated by the cellulose ether.

DETAILED DESCRIPTION

The present invention begins with an unpaved road that contains a layer of loose road material (soil and/or aggregate), which further contains cellulose ether and water. By "loose" we mean that the layer of road material can be further compacted to substantially stabilize the layer by known means, such as using compacting or rolling equipment. In some embodiments, the layer of loose road material has been added to the road. In some embodiments, the layer of loose road material has been created in place by scarifying the existing surface. In some embodiments, the layer of loose road material has been leveled and/or graded. In some embodiments, the layer of loose road material has not been compacted using compacting equipment, such as rollers, rammers or vibratory plate compactors.

Principles of design for unpaved roads are well-known and published. In some embodiments, the road cross section is designed such that the finished road has a crowned driving surface, shoulder areas on each side of the road that slope away from the edges of the driving surface, and ditches outside each shoulder area to receive water from the shoulder and safely channel it away from the driving surface. In some embodiments, the road cross section is designed such that the finished road has a slightly sloped driving surface, a single shoulder area on the down-slope side of the road, and a ditch outside the shoulder area to receive water from the shoulder and safely channel it away from the driving surface. In some embodiments, the ditches may be planted with vegetation to reduce erosion.

Generally, the surface along the length of the road surface is designed to be substantially level. In some embodiments, the grade is no more than 6 percent for a soil driving surface or no more than 10 percent for an aggregate surface, although short stretches of 15 percent grade may be permitted on a gravel surface if necessary. In some embodiments, culverts may cross under the road to carry water safely from one side of the road to the other without erosion.

The driving surface and shoulders may contain one or more layers of road material. If more than one layer is used, the top layer is called the surface layer, and the lower layers are called the base layers.

In some embodiments, the road material may comprise soil. In some embodiments, the road material may comprise aggregate. In some embodiments, the road material may comprise both soil and aggregate, in a single layer or in separate layers. It will be recognized that in many cases, a layer that contains primarily aggregate may contain small amounts of soil, and a layer that contains primarily soil may contain small amounts of stones or other aggregate.

Soil used as road material may contain varying levels of sand, silt, clay, organic material and water. For clarity:

- Particles with a size down to 4.75 mm (4 mesh) are commonly referred to as gravels.
- Particles with a size from 0.075 mm (200 mesh) to 4.75 mm (4 mesh) are commonly referred to as sands.
- Particles with a size below 0.075 mm (200 mesh) that have substantially no cohesion strength when dried are commonly referred to as silts.
- Particles with a size below 0.075 mm (200 mesh) that are substantially cohesive when dried are commonly referred to as clays.

In some embodiments, the soil used in road material contains at least 65 weight percent sand and gravel, excluding the weight of water, or at least 70 weight percent or at least 75 weight percent or at least 80 weight percent or at least 85 weight percent or at least 90 weight percent or at least 95 weight percent. In some embodiments, the soil used in road material contains at most 100 weight percent sand, excluding the weight of water, or at most 95 weight percent or at most 90 weight percent. In some embodiments, the soil used in road material contains at least 0 weight percent clay and silt, excluding the weight of water, or at least 5 weight percent. In some embodiments, the soil used in road material contains at most 35 weight percent clay and silt, excluding the weight of water, or at most 30 weight percent or at most 25 weight percent or at most 20 weight percent or at most 15 weight percent or at most 10 weight percent.

Aggregate used in road material comprises rock particles, usually in a mixture of different sizes. Aggregate used in base layers of road material is frequently coarser than aggregate used in surface layers. In some embodiments, the particle size of surface layer aggregate meets one or more of the specifications in Table 1. In some embodiments where the road has a base layer of aggregate, the particle size of base layer aggregate meets one or more of the specifications in Table 1.

**Table 1**

| Sieve Size | Wt. Percent Base Aggregate Passing | | Wt. Percent Surface Aggregate Passing | |
|---|---|---|---|---|
| | Min | Max | Min | Max |
| 1" (2.5 cm) | 100 | | 100 | |
| ¾ in (1.9 cm) | 80 | | 100 | |
| ½ in. (1.3 cm) | 65 | 95 | 30 or 45 | 80 or 65 |

(continued)

| Sieve Size | Wt. Percent Base Aggregate Passing | | Wt. Percent Surface Aggregate Passing | |
|---|---|---|---|---|
| | Min | Max | Min | Max |
| No. 4 | 40 | 75 | 35 | 70 |
| No. 8 | 30 | 60 | | |
| No. 16 | | | 10 or 15 | 30 or 40 |
| No. 40 | 10 | 40 | 10 | 40 |
| No. 200 | 0 | 15 | 2 or 5 | 20 or 15 |

In some embodiments, a base layer of road material contains 50 to 70 weight percent gravel, 25 to 40 weight percent sand, and 0 to 10 weight percent silt and clay, excluding the weight of water. In some embodiments, a surface layer of road material contains 50 to 70 weight percent gravel, 25 to 40 weight percent sand, and 10 to 15 weight percent silt and clay, excluding the weight of water.

Road materials can be rated according to California Bearing Ratio (CBR), as measured by ASTM D1883. In some embodiments, the road material has a CBR or at least 10 or at least 20 or at least 25 or at least 30 or at least 35 or at least 40. In some embodiments, the road material has a CBR or at most 90 or at most 80 or at most 75 or at most 70 or at most 65 or at most 60.

Road materials are also rated by the Atterberg Limits of liquid limit, plastic limit and plasticity index (PI), which can be determined according to ASTM D4318. The liquid limit is the water content at which the behavior of soil changes from the plastic state to the liquid state. Plastic limit is the water content at which the behavior of soil changes from a semisolid to a plastic state. Plasticity index is the range of water content between the liquid limit and the plastic limit, in which the soil is in a plastic state. Road materials with a low plasticity index, below 7%, are more rigid and stable under damp conditions so they minimize rutting, but they also tend to have higher levels of large stones which provide a rough surface for driving and are difficult to plane smooth. In some embodiments, road materials with low plasticity index are selected for base layers of the road surface. Road materials with a moderate plasticity index, from 7 to 28%, tend to contain more small stones, which makes them easier to plane to form a smooth surface, and also tend to contain small amounts of clay, which reduces dust. In some embodiments, road materials with moderate plasticity index are selected for surface layers of the road surface. Road materials with a high plasticity index, above 28%, are likely to form wheel ruts when wet; in some embodiments they are not used in road materials.

In some embodiments, the road material has a plasticity index of at least 0% or at least 2% or at least 4%. In some embodiments, the road material has a plasticity index of at most 35% at most 30% at most 28% or at most 25% or at most 20% or at most 15% or at most 10%. In some embodiments, a surface layer of road material has a plasticity index of at least 2% or at least 4% or at least 6%. In some embodiments, a surface layer of road material has a plasticity index of at most 20% or at most 15% or at most 12% or at most 10%. In some embodiments, a base layer of road material has a plasticity index of at least 0% or at least 1% or at least 2%. In some embodiments, a base layer of road material has a plasticity index of at most 8% or at most 6% or at most 5%.

In some embodiments, the depth of the layer of loose road material is at least 5 cm or at least 10 cm or at least 12 cm or at least 15 cm or at least 18 cm or at least 20 cm. In some embodiments, the depth of the layer of loose road material is at most 100 cm thick or at most 80 cm or at most 60 cm or at most 50 cm or at most 40 cm or at most 30 cm or at most 25 cm or at most 20 cm.

In some embodiments, the layer of loose road material is made by bringing loose road material to the site. In some embodiments, the layer of loose road material is created onsite by scarifying (breaking up and turning up) the existing surface, which may be accomplished using known equipment such as scarifiers, graders with scarifying blades and pulverizers. In some embodiments, both steps are performed - the road surface is scarified, and additional road material is brought in and added. In some embodiments, the loose road material is further spread, graded and leveled to create the desired shape and grade of the road.

The layer of loose road material further contains water and a nonionic water-soluble cellulose ether.

In some embodiments, the cellulose ether is mixed with the water before they are added to the loose road material. In some embodiments, the cellulose ether is added to the loose road material, separately from the water. For example, in some embodiments, the cellulose ether is mixed with the loose road material, such as in a drum or mixer, before the loose road material is deposited in a layer. In some embodiments, the cellulose ether is deposited on the layer of loose road material after the road material is in place on the road surface, and in some embodiments the cellulose ether is then partially blended in when the layer is leveled and/or graded.

In some embodiments, water is added into the loose road material before the loose road material is deposited in a

layer. In some embodiments, water is sprayed on the layer of loose road material after it is deposited on the road surface and/or after the layer of loose road material is levelled. In some embodiments, the road material contains suitable ambient levels of water, such as from rain.

In one exemplary embodiment, cellulose ether is mixed with the loose road material, then the loose road material is deposited in a layer on the road surface, then the layer is spread, graded and/or leveled and then water is sprayed on the layer. In another exemplary embodiment, the loose road material is deposited in a layer on the road surface, the cellulose ether is applied onto the layer, the layer is spread, graded and/or leveled before or after the cellulose ether is applied, and then water is sprayed on the layer. In another exemplary embodiment, the loose road material is deposited in a layer on the road surface, a mixture of cellulose ether and water is applied onto the layer, and the layer is spread, graded and/or leveled before or after the mixture of cellulose ether and water is applied.

Cellulose ethers are polymers comprising cellulose, in which at least some of the hydroxyl groups in the cellulose repeating units are substituted with an alkoxy or substituted alkoxy group.

Cellulose ethers comprise repeating units as shown in Formula 1, called anhydroglucose units. In cellulose, each of $R^1$, $R^2$ and $R^3$ is hydrogen, but in cellulose ethers at least some of $R^1$, $R^2$ and $R^3$ are independently substituted with an alkyl or substituted alkyl group. The remaining unsubstituted $R^1$, $R^2$ and $R^3$ groups are hydrogen. "n" is a number of anhydroglucose repeating units.

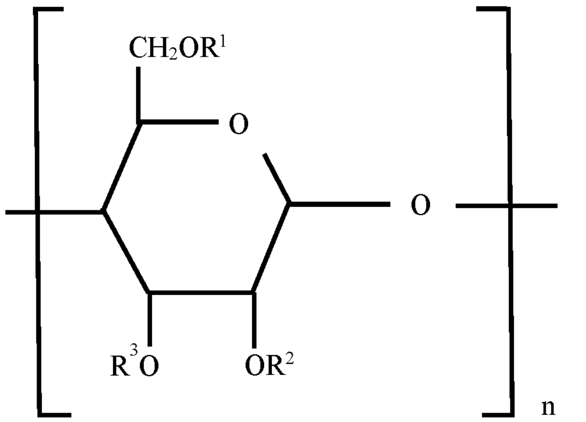

1

Alkyl and substituted alkyl groups in the $R^1$, $R^2$ or $R^3$ position contain at least 1 carbon atom. In some embodiments, alkyl and substituted alkyl groups in the $R^1$, $R^2$ or $R^3$ position contain at most 12 carbon atoms or at most 8 carbon atoms or at most 6 carbon atoms or at most 4 carbon atoms or at most 3 carbon atoms. The alkyl and substituted alkyl groups may be linear, branched or cyclic; in some embodiments they are linear and attached to the oxygen atom in a normal or iso configuration. In some embodiments, the substituted alkyl group comprises a hydroxyl group, an alkoxy group or a halide moiety; and in some embodiments it comprises a hydroxyl group.

Examples of common alkyl and substituted alkyl groups include methyl, ethyl, n-propyl, iso-propyl, hydroxyethyl and hydroxypropyl groups. (Cellulose ethers substituted with carboxyalkyl groups are also readily available, but the carboxyalkyl cellulose ethers are frequently insoluble in water unless converted to a salt. As a result, many cellulose ethers that contain substantial quantities of carboxyalkyl groups are not water-insoluble, nonionic cellulose ethers.)

In some embodiments, all alkyl and substituted alkyl groups in the $R^1$, $R^2$ or $R^3$ position are the same, and in some embodiments the cellulose ether contains a mixture of different alkyl and substituted alkyl groups in the $R^1$, $R^2$ or $R^3$ position, such as methyl and ethyl or methyl and hydroxy ethyl or methyl and hydroxy propyl. Examples of the nonionic cellulose ethers include methyl cellulose, ethyl cellulose, ethyl methyl cellulose, hydroxyethyl cellulose, hydroxyethyl methylcellulose and hydroxypropyl methylcellulose.

Average degree of substitution defines the average number of alkyl and substituted alkyl groups in an $R^1$, $R^2$ or $R^3$ position in each anhydroglucose unit. In some embodiments, the average degree of substitution for the water-soluble, nonionic cellulose ether is at least 0.75 or at least 0.95 or at least 1.2 or at least 1.5 or at least 1.7 or at least 1.9. In some embodiments, the average degree of substitution for the water-soluble, nonionic cellulose ether is most 3 or at most 2.7 or at most 2.5 or at most 2.3 or at most 2.1.

In some embodiments, the cellulose ether contains both methyl or ethyl substitution and hydroxy ethyl or hydroxy propyl substitution. In some embodiments, the cellulose ether contains both methyl substitution and hydroxy ethyl substitution. In some embodiments,

- the degree of methyl or ethyl substitution is at least 1 or at least 1.2 or at least 1.3 or at least 1.4 and is at most 2.4 or at most 2.3 or at most 2.2 or at most 2.1 or at most 2.0 or at most 1.9 or at most 1.8; and

- the degree of hydroxy ethyl or hydroxy propyl substitution is at least 0.02 or at least 0.05 or at least 0.10 or at least 0.15 or at least 0.20 and is at most 1 or at most 0.9 or at most 0.8 or at most 0.7 or at most 0.6 or at most 0.5 or at most 0.4.

In some embodiments, a 2 percent aqueous solution of the cellulose ether, when measured as described in the test methods, has a viscosity of at least 100 cP or at least 1000 cP or at least 10,000 cP or at least 12,000 cP. In some embodiments, a 2 percent aqueous solution of the cellulose ether, when measured as described in the test methods, has a viscosity of at most 50,000 cP or at most 45,000 cP or at most 40,000 cP.

In some embodiments, a 1 percent aqueous solution of the cellulose ether, when measured as described in the test methods, has a viscosity of at least 100 cP or at least 1000 cP or at least 10,000 cP or at least 12,000 cP. In some embodiments, a 2 percent aqueous solution of the cellulose ether, when measured as described in the test methods, has a viscosity of at most 30,000 cP or at most 20,000 cP or at most 15,000 cP.

Suitable cellulose ethers are commercially available, such as under the WALOCEL, METHOCEL and CELLOSIZE trademarks. Others can be produced by known processes. See, for example, US4,845,206 and Harika K et al., Basic Concepts of Cellulose Polymers- A Comprehensive Review. 3(3) Archives of Pharmacy Practice 202-216 (2012). In many cases, cellulose ethers can be produced by a two-step process. In the first step, cellulose is contacted with aqueous alkali hydroxide to form an alkali cellulose. In the second step, the alkali cellulose is contacted with an etherifying agent that is suitable for the cellulose ether to be produced.

- Etherifying agents for alkyl substituents include alkyl chlorides. For example, in production of methyl cellulose, the etherifying agent is methyl chloride. In the production of ethyl cellulose, the etherifying agent is ethyl chloride.
- Etherifying agents for hydroxy alkyl substituents include alkyl epoxides. For example, in the production of hydroxypropyl cellulose, the etherifying agent is propylene oxide.
- Mixtures of etherifying agents can produce cellulose ethers with mixed ether substituents, such as ethyl methylcellulose or hydroxypropyl methylcellulose.

After production, the cellulose ether is typically washed to remove impurities and dried. It may be ground to a powder, if not already in suitable powder form.

In the present invention, water and the cellulose ether are blended with the layer of road material either separately or together as a solution in water.

The weight ratio of cellulose ether (excluding water) to loose road material in the layer is at least 0.05 weight percent. In some embodiments, the weight ratio of cellulose ether (excluding water) to loose road material in the layer is at least 0.1 percent or at least 0.15 percent or at least 0.2 percent or at least 0.3 percent or at least 0.4 percent. In some embodiments, the weight ratio of cellulose ether (excluding water) to loose road material in the layer is at most 5 percent or at most 3 percent or at most 2 percent or at most 1.5 percent or at most 1 percent or at most 0.8 percent or at most 0.6 percent.

In some embodiments, the weight ratio of cellulose ether to water in the layer of loose road material is at least 1 percent or at least 1.5 percent or at least 2 percent or at least 3 percent or at least 4 percent. In some embodiments, the weight ratio of cellulose ether to water in the layer of loose road material is at most 20 percent or at most 15 percent or at most 12 percent or at most 10 percent or at most 8 percent or at most 6 percent.

In some embodiments, the weight ratio of water to loose road material in the layer is at least 5 percent or at least 6 percent or at least 7 percent or at least 8 percent or at least 9 percent. In some embodiments, the weight ratio of water to loose road material in the layer is at most 20 percent or at most 15 percent or at most 13 percent or at most 12 percent or at most 11 percent or at most 10 percent.

In some embodiments, the level of water saturation in road material (volume of water per volume of available space between particles) is at least 15 percent or at least 20 percent or at least 25 percent or at least 27 percent. In some embodiments, the level of water saturation in road material is at most 40 percent or at most 35 percent or at most 30 percent.

In some embodiments where the cellulose ether is pre-mixed with the water, the resulting solution has a viscosity at 20°C of at least 100 cP or at least 500 cP or at least 1000 cP or at least 2000 cP or at least 5000 cP or at least 8000 cP or at least 10,000 cP or at least 12,000 cP. In some embodiments where the cellulose ether is pre-mixed with the water, the resulting solution has a viscosity at 20°C of at most 250,000 cP or at most 150,000 cP or at most 100,000 cP or at most 75,000 cP or at most 50,000 cP or at most 25,000 cP.

The road material is compacted while the cellulose ether and water are still substantially mixed with the road material. Compaction can be accomplished by known means, such as with rollers, rammers or vibratory compactors. In some embodiments, the compaction is accomplished using a roller.

In some embodiments, the compaction step reduces the thickness of the layer by at least 5%, or at least 10% or at least 15% or at least 20% or at least 25%. In some embodiments, the compaction step reduces the thickness of the layer by at most 60%, or at most 50% or at most 40% or at most 35% or at most 30%. In some embodiments, the thickness of a

compacted surface layer is at least 2 cm or at least 5 cm or at least 10 cm or at least 12 cm or at least 15 cm or at least 18 cm or at least 20 cm. In some embodiments, the thickness of a compacted surface layer is at most 45 cm or at most 42 cm or at most 40 cm or at most 35 cm or at most 30 cm.

In some embodiments, other materials may be added to the layer of road material, either before or after compaction, such as to provide additional stabilization or dust control. Examples of such materials and their use are described in the Introduction, such as magnesium chloride, calcium chloride, lignin sulfate, clay, vegetable and mineral oils, polymer emulsions, and enzyme agents. The other materials can help particles of soil and aggregate to adhere to each other, stabilizing them and reducing dust.

The process makes a road that comprises a layer of road material which contains cellulose ether. The road material is loose before compaction and is compacted after compaction. The road material and cellulose ether have the descriptions and exemplary embodiments that have been discussed. The quantity of cellulose ether may meet the description previously given or it may be less, because water may have carried some cellulose ether out of the layer. In some embodiments, the quantity of cellulose ether in the layer immediately after compaction is 10% less than what was described to be added, or 20% less or 30% less or 40% less or 50% less or 60% less. Quantities of cellulose ether in the layer of road material may further decline over time because rain and other applications of water dissolve the cellulose ether and carry it away.

In some embodiments, the compacted road material of this invention exhibits a yield strength that is at least 10 percent higher than the yield strength of similarly compacted road material without cellulose ether, when measured according to the Test Methods, or at least 20 percent higher or at least 30 percent higher or at least 40 percent higher or at least 50 percent higher. There is no maximum desirable improvement in yield strength, but it may be unnecessary to seek yield strength improvement more than 100% or 80 percent or 60 percent.

In some embodiments, the compacted road material of this invention exhibits a linearized angle of friction that is less than 36° or less than 35° or less than 34° or less than 33°, when measured according to the Test Methods. In some embodiments, the compacted road material of this invention exhibits a linearized angle of friction that is at least 15° or at least 20° or at least 25° or at least 30°.

As discussed, the quantity of cellulose ether in the road material declines over time until it essentially gone, due to rain and other applications of water. Many cellulose ethers are biodegradable and/or non-toxic to plants and animals, so their use in this invention raises few environmental, health and safety concerns.

## Test Methods

Unless stated otherwise, measurements listed in this application are made using the following test methods:

| Parameter | Test |
|---|---|
| Aggregate Particle Size Profile | ASTM C0136: Sieve analysis |
| Liquid Limit, Plastic Limit and Plasticity Index | ASTM D4318 |
| Cellulose Ether Viscosity | 2% solution in water, Haake Rotovisko RV 100, shear rate 2.55 $s^{-1}$, 20°C<br>1% solution in water, Haake Rotovisko RV 100, shear rate 2.55 $s^{-1}$, 20°C |
| Cellulose Ether Degrees of Substitution | "Zeisel method." Zeisel Cleavage procedure for determination of MS and DS, see G. Bartelmus and R. Ketterer, Fresenius Zeitschrift für Analytische Chemie, Vol. 286 (1977, Springer, Berlin, DE), pages 161 to 190 |
| Unconfined Yield Strength and Angle of Friction | ASTM D6773. |
| Particle density (ρi) | ASTM D5550 |
| California Bearing Ratio (CBR) | ASTM D1883 |

## Water Saturation

Water saturation is defined by the volume percentage of voids in the soil sample that are filled with water:

$$\text{Water saturation} = (Vw)/VV,$$

wherein

- Vw is the volume of water in the wet soil composition, and
- VV is the total void volume in the total mixture determined by measuring:
    - ρi, = the particle density of each material other than water,
    - mi = the total mass of each material other than soil and water,
    - V = the total volume of all materials other than water,

  and calculating void volume VV = V - Σ(mi/ρi);

Examples

The following examples illustrate specific embodiments of the invention, but do not limit the broadest scope of the invention.

***Preparation of Soil Samples:***

The cellulose ethers in Table 2 (11-16) are obtained. Also, the comparative stabilizing materials in Table 2 (C1-C4) are obtained. Collectively, the cellulose ethers and other stabilizers are called "viscosity modifying additives" or "VMA".

**Table 2**

| Name | Tradename | Type | Viscosity[2] (cP) | pH |
|---|---|---|---|---|
| I1 | WALOCEL™ MKX 15000 | Hydroxyethyl methylcellulose | 15000[2] | neutral |
| I2 | WALOCEL™ MKX 120-01 | Hydroxyethyl methylcellulose | 12000-16000 [1] | neutral |
| I3 | WALOCEL™MW 15000 PFV | Hydroxyethyl methylcellulose | 14000-18000[2] | neutral |
| I4 | METHOCEL™ 240S | Hydroxypropyl methylcellulose | 40000 | neutral |
| I5 | WALOCEL™ M20678 | Hydroxyethyl methylcellulose | 80,000[1] | Neutral |
| I6 | CELLOSIZE QP-15000 | Hydroxyethyl cellulose | 15,000 | |
| Comparative Stabilizers | | | | |
| C1 | Polyox | Polyethylene oxide polymer | | |
| C2 | Starvis T 51F | Acrylamide | | |
| C3 | Sodium Lauryl Sulfate | Surfactant | This does not modify viscosity at dosage rate | |
| C4 | ACULYN™ 28 | Acrylates / Beheneth-25 Methacrylate Copolymer | | 8 |

1 - Viscosity of 1% aqueous solution measured. Other conditions are the same as listed in test Methods.
2 - Viscosity is measured for a 2% aqueous solution, measured at 20°C as described in the Test Methods, unless otherwise noted.

Three soil samples are mixed up containing the ingredients shown in Table 3. All numbers are parts by weight.

**Table 3**

| **Sample** | **A** | **B** | **C** |
|---|---|---|---|
| C-788 Ottawa Sand - coarse grain sand | 400 | 400 | 400 |
| 730 grade sand - fine grain sand | 120 | 120 | 120 |

(continued)

| Sample | A | B | C |
|---|---|---|---|
| MicroWhite™ 100 medium particle marble sand | 280 | 200 | - |
| KaMin 35 water-washed kaolin clay | - | 80 | 280 |

Inventive example and comparative example formulations having the contents listed in Table 4 are made by dry mixing soil samples and viscosity modifying additives in a plastic bag for two minutes in proportions shown in Table 4. Each mixed sample is added to a mixing bowl (Hobart N50 Mixer) containing the amount of water shown in Table 4, except in IE 41 the cellulose ether and water are mixed together before being mixed with the soil sample. The sample is mixed at 136 RPM for 15 seconds. Paste on the mixing bowl sides is scraped off and returned to the bowl bottom. The formulation is mixed again at the same rotation rate. Water saturation of each sample is measured as described in the Test Methods and is recorded in Table 4. The yield strength and linear angle of friction for each sample are measured as set out in the Test Methods and are recorded in Table 4.

| Sample | Soil Sample | VMA | VMA Level (%)(3) | VMA/ Water (w/w)(4) | Water Saturation (%)(5) | Viscosity (mPa s) | Yield Strength (kPa) | Angle of Friction (°) |
|---|---|---|---|---|---|---|---|---|
| IE1 | A | I1 | 0.2 | 0.024 | 23.6 | 3.31E+04 | 52 | 36.4 |
| IE2 | A | I1 | 0.5 | 0.058 | 23.6 | 1.21E+06 | 58 | 36.4 |
| IE3 | A | I1 | 1 | 0.11 | 23.6 | 1.63E+07 | 57 | 36.4 |
| IE4 | A | I5 | 0.2 | 0.024 | 23.6 | 1.74E+05 | 55 | 36.4 |
| IE5 | A | I5 | 0.4 | 0.047 | 23.6 | 2.68E+06 | 60 | 35.9 |
| IE6 | A | I2 | 0.2 | 0.024 | 23.6 | 2.61E+05 | 56 | 36.9 |
| IE7 | A | I2 | 0.5 | 0.058 | 23.6 | 9.58E+06 | 62 | 36.1 |
| IE8 | A | I2 | 1 | 0.11 | 23.6 | 1.30E+08 | 64 | 35.2 |
| CE1 | A | None | 0 | 0 | 23.6 | 1 | 45 | 37.2 |
| IE9 | A | I1 | 0.2 | 0.021 | 27.2 | 1.91E+04 | 52 | 36.2 |
| IE10 | A | I1 | 0.4 | 0.041 | 27.2 | 2.97E+05 | 57 | 35.3 |
| IE11 | A | I1 | 1 | 0.098 | 27.2 | 9.85E+06 | 67 | 35.2 |
| IE12 | A | I5 | 0.2 | 0.021 | 27.2 | 1.00E+05 | 56 | 36.7 |
| IE13 | A | I5 | 0.4 | 0.041 | 27.2 | 1.57E+06 | 62 | 35.7 |
| IE14 | A | I2 | 0.2 | 0.021 | 27.2 | 1.50E+05 | 56 | 36.6 |
| IE15 | A | I2 | 0.4 | 0.041 | 27.2 | 2.35E+06 | 62 | 35.5 |
| IE16 | A | I2 | 1 | 0.098 | 27.2 | 7.83E+07 | 64 | 34.8 |
| IE17 | A | I4 | 0.2 | 0.021 | 27.2 | | 51 | 36.4 |
| IE18 | A | I4 | 0.3 | 0.031 | 27.2 | | 55 | 36.6 |

| Sample | Soil Sample | VMA | VMA Level (%)(3) | VMA/ Water (w/w)(4) | Water Saturation (%) (5) | Viscosity (mPa s) | Yield Strength (kPa) | Angle of Friction (°) |
|---|---|---|---|---|---|---|---|---|
| CE19 | A | I6 | 0.2 | 0.021 | 27.2 | | 47 | 36.9 |
| CE20 | A | I6 | 0.3 | 0.031 | 27.2 | | 49 | 36.7 |
| CE2 | A | None | 0 | 0 | 27.2 | 1 | 42 | 37.2 |
| CE3 | A | C1 | 0.2 | 0.021 | 27.2 | | 51 | 37.3 |
| CE4 | A | C1 | 0.5 | 0.051 | 27.2 | | 45 | 36.6 |

(continued)

| Sample | Soil Sample | VMA | VMA Level (%)(3) | VMA/ Water (w/w)(4) | Water Saturation (%) (5) | Viscosity (mPa s) | Yield Strength (kPa) | Angle of Friction (°) |
|---|---|---|---|---|---|---|---|---|
| CE5 | A | C1 | 0.75 | 0.075 | 27.2 | >2E06? | 49 | 36.3 |
| CE6 | A | C1 | 1 | 0.098 | 27.2 | >2E06 | 53 | 35.9 |
| CE7 | A | C2 | 0.3 | 0.031 | 27.2 | >2E06? | 48 | 36.6 |
| CE8 | A | C2 | 0.4 | 0.041 | 27.2 | >2E06 | 47 | 36.4 |
| CE9 | A | C3 | 0.05 | | 27.2 | | 32 | 36.5 |
| CE10 | A | C3 | 0.005 | | 27.2 | | 39 | 37.2 |
| CE11 | A | C4 | 0.3 | 0.031 | 27.2 | | 51 | 36.9 |
| CE12 | A | C4 | 0.4 | 0.041 | 27.2 | | 50 | 36.7 |
| IE21 | A | I3 | 0.2 | 0.019 | 30.8 | 1.18E+04 | 47 | 36.3 |
| IE22 | A | I3 | 0.5 | 0.046 | 30.8 | 4.41E+05 | 59 | 35.5 |
| IE23 | A | I3 | 1 | 0.087 | 30.8 | 6.27E+06 | 67 | 35.5 |
| IE24 | A | I5 | 0.2 | 0.019 | 30.8 | 6.16E+04 | 54 | 36.6 |
| IE25 | A | I5 | 0.4 | 0.037 | 30.8 | 9.70E+05 | 60 | 35.0 |
| IE26 | A | I2 | 0.2 | 0.019 | 30.8 | 9.25E+04 | 56 | 36.2 |
| IE27 | A | I2 | 0.5 | 0.046 | 30.8 | 3.50E+06 | 68 | 34.3 |
| IE28 | A | I2 | 1 | 0.087 | 30.8 | 4.99E+07 | 69 | 34.7 |
| CE13 | A | None | 0 | 0 | 30.8 | 1 | 36 | 37.8 |
| CE14 | A | None | 0 | 0 | 27.2 | 1 | 42 | 37.2 |
| IE29 | A | I3 | 0.2 | 0.021 | 27.2 | 1.91E+04 | 52 | 36.2 |
| IE30 | A | I3 | 0.3 | 0.031 | 27.2 | 9.55E+04 | 55 | 35.8 |
| IE31 | A | I3 | 1 | 0.098 | 27.2 | 9.85E+06 | 67 | 35.2 |
| IE32 | A | I1 | 0.3 | 0.031 | 27.2 | | 62 | 36.5 |
| IE33 | A | I1 | 0.3 | 0.031 | 27.2 | | 53 | 35.2 |
| CE15 | A | None | 0 | 0 | 27.2 | 1 | 42 | 37.2 |
| CE16 | B | None | 0 | 0 | 27.2 | 1 | 46 | 34.4 |
| IE34 | B | I3 | 0.2 | 0.021 | 27.2 | 1.91E+04 | 66 | 34 |
| IE35 | B | I3 | 0.3 | 0.031 | 27.2 | 9.55E+04 | 69 | 34 |
| CE17 | C | none | 0 | 0 | 27.2 | 1 | 77 | 32.6 |
| IE36 | C | I3 | 0.2 | 0.021 | 27.2 | 1.91E+04 | 67 | 32.5 |
| IE37 | C | I3 | 0.3 | 0.031 | 27.2 | 9.55E+04 | 68 | 32 |
| CE18 | A | None | 0 | 0 | 27.2 | 1 | 42 | 37.2 |
| CE19 | B | none | 0 | 0 | 27.2 | 1 | 46 | 34.4 |
| IE38 | B | I3 | 0.2 | 0.21 | 27.2 | 1.91E+04 | 66 | 34.0 |
| IE39 | B | I3(1) | 0.2 | 0.21 | 27.2 | | 77 | 34.3 |
| IE40 | A | I2 | 0.1% | 0.0107 | 27.2 | 9.35E+03 | 52.2 | 36.7 |
| IE41(2) | A | I2 | 0.1% | 0.0107 | 27.2 | 9.35E+03 | 51.1 | 36.6 |

(1) Also contains 0.015 weight percent Melflux 2651F superplasticizer, based on total weight of solids excluding water.

(continued)

| Sample | Soil Sample | VMA | VMA Level (%)(3) | VMA/ Water (w/w)(4) | Water Saturation (%) (5) | Viscosity (mPa s) | Yield Strength (kPa) | Angle of Friction (°) |
|---|---|---|---|---|---|---|---|---|
| (2) Cellulose Ether is blended with the water until smoothly distributed before mixing with soil sample.<br>(3) Weight percent.<br>(4) Weight Ratio.<br>(5) Volume percent | | | | | | | | |

## Claims

**1.** A process to stabilize a layer of soil or aggregate, called "road material", in an unpaved road, comprising the steps of:

a) providing an unpaved road that contains a layer of loose road material, wherein the layer of loose road material further contains (1) a water-soluble nonionic cellulose ether in a quantity of at least 0.05 weight percent, based on the weight of road material in the layer excluding water, and (2) water;
b) compacting the layer of loose road material containing the cellulose ether and water.

**2.** The process of Claim 1 wherein the water and the water-soluble nonionic cellulose ether are mixed together before adding to the loose road material.

**3.** The process of Claim 2 wherein the mixture of water and water-soluble nonionic cellulose ether has a viscosity at 20°C from 1000 cP to 100,000 cP.

**4.** The process of Claim 1 wherein the water-soluble nonionic cellulose ether is added to the loose road material separately from the water.

**5.** The process of Claim 1 wherein the loose road material comprises primarily soil.

**6.** The process of Claim 1 wherein the loose road material comprises primarily aggregate.

**7.** The process of Claim 1 wherein the weight ratio of cellulose ether to loose road material (excluding water) is at least 0.1 percent.

**8.** The process of Claim 7 wherein the weight ratio of cellulose ether to loose road material (excluding water) is at least 0.2 percent.

**9.** The process of Claim 7 wherein the weight ratio of cellulose ether to loose road material (excluding water) is at most 2 percent.

**10.** The process of Claim 1 wherein the weight ratio of cellulose ether to water is at least 1 percent.

**11.** The process of Claim 10 wherein the weight ratio of cellulose ether to water is at most 15 percent.

**12.** The process of Claim 1 wherein the cellulose ether is selected from the group consisting of hydroxyethyl methylcellulose and hydroxypropyl methylcellulose.

**13.** The process of Claim 1 wherein after compaction the road material exhibits a yield strength that is at least 10 percent higher than the yield strength of similarly compacted road material without cellulose ether.

**14.** The process of Claim 1 wherein after compaction the road material exhibits a linearized internal angle of friction that is less than 35°.

**15.** A road comprising a layer of soil or aggregate, called "road material", which contains at least 0.025 weight percent of a water-soluble nonionic cellulose ether, based on the weight of solids in the layer of road material, excluding water.

## Patentansprüche

1. Prozess zur Stabilisierung einer Schicht aus Erde oder Zuschlagstoffen, genannt "Straßenmaterial", in einer unbefestigten Straße, umfassend die folgenden Schritte:

   a) Bereitstellen einer unbefestigten Straße, die eine Schicht aus losem Straßenmaterial enthält, wobei die Schicht aus losem Straßenmaterial ferner (1) einen wasserlöslichen nichtionischen Celluloseether in einer Menge von mindestens 0,05 Gewichtsprozent, bezogen auf das Gewicht des Straßenmaterials in der Schicht ohne Wasser, und (2) Wasser enthält;
   b) Verdichten der Schicht aus losem Straßenmaterial, das den Celluloseether und Wasser enthält.

2. Prozess nach Anspruch 1, wobei das Wasser und der wasserlösliche nichtionische Celluloseether vor dem Zugeben zu dem losen Straßenmaterial miteinander vermischt werden.

3. Prozess nach Anspruch 2, wobei die Mischung aus Wasser und wasserlöslichem nichtionischem Celluloseether eine Viskosität bei 20 °C von 1000 cP bis 100.000 cP aufweist.

4. Prozess nach Anspruch 1, wobei der wasserlösliche nichtionische Celluloseether dem losen Straßenmaterial getrennt vom Wasser zugegeben wird.

5. Prozess nach Anspruch 1, wobei das lose Straßenmaterial hauptsächlich Erde umfasst.

6. Prozess nach Anspruch 1, wobei das lose Straßenmaterial hauptsächlich Zuschlagstoffe umfasst.

7. Prozess nach Anspruch 1, wobei das Gewichtsverhältnis von Celluloseether zu losem Straßenmaterial (ohne Wasser) mindestens 0,1 Prozent beträgt.

8. Prozess nach Anspruch 7, wobei das Gewichtsverhältnis von Celluloseether zu losem Straßenmaterial (ohne Wasser) mindestens 0,2 Prozent beträgt.

9. Prozess nach Anspruch 7, wobei das Gewichtsverhältnis von Celluloseether zu losem Straßenmaterial (ohne Wasser) höchstens 2 Prozent beträgt.

10. Prozess nach Anspruch 1, wobei das Gewichtsverhältnis von Celluloseether zu Wasser mindestens 1 Prozent beträgt.

11. Prozess nach Anspruch 10, wobei das Gewichtsverhältnis von Celluloseether zu Wasser höchstens 15 Prozent beträgt.

12. Prozess nach Anspruch 1, wobei der Celluloseether ausgewählt ist aus der Gruppe, bestehend aus Hydroxyethylmethylcellulose und Hydroxypropylmethylcellulose.

13. Prozess nach Anspruch 1, wobei das Straßenmaterial nach der Verdichtung eine Streckgrenze aufweist, die mindestens 10 Prozent höher ist als die Streckgrenze von ähnlich verdichtetem Straßenmaterial ohne Celluloseether.

14. Prozess nach Anspruch 1, wobei das Straßenmaterial nach der Verdichtung einen linearisierten inneren Reibungswinkel aufweist, der weniger als 35° beträgt.

15. Straße, umfassend eine Schicht aus Erde oder Zuschlagstoffen, genannt "Straßenmaterial", die mindestens 0,025 Gewichtsprozent eines wasserlöslichen nichtionischen Celluloseethers enthält, bezogen auf das Gewicht der Feststoffe in der Schicht aus Straßenmaterial, ausschließlich Wasser.

## Revendications

1. Procédé de stabilisation d’une couche de sol ou de granulats, appelé « matériau routier », dans une route non pavée, comprenant les étapes consistant à :

a) fournir une route non pavée qui contient une couche de matériau routier meuble, dans lequel la couche de matériau routier meuble contient en outre (1) un éther de cellulose non ionique hydrosoluble en une quantité d'au moins 0,05 % en poids, sur la base du poids de matériau routier dans la couche à l'exclusion de l'eau, et (2) de l'eau ;
b) compacter la couche de matériau routier meuble contenant l'éther de cellulose et de l'eau.

**2.** Procédé selon la revendication 1, dans lequel l'eau et l'éther de cellulose non ionique hydrosoluble sont mélangés ensemble avant d'être ajoutés au matériau routier meuble.

**3.** Procédé selon la revendication 2, dans lequel le mélange d'eau et d'éther de cellulose non ionique hydrosoluble a une viscosité à 20 °C allant de 1 000 cP à 100 000 cP.

**4.** Procédé selon la revendication 1, dans lequel l'éther de cellulose non ionique hydrosoluble est ajouté au matériau routier meuble séparément de l'eau.

**5.** Procédé selon la revendication 1, dans lequel le matériau routier meuble comprend principalement du sol.

**6.** Procédé selon la revendication 1, dans lequel le matériau routier meuble comprend principalement des granulats.

**7.** Procédé selon la revendication 1, dans lequel le rapport en poids d'éther de cellulose au matériau routier meuble (à l'exclusion de l'eau) est d'au moins 0,1 pour cent.

**8.** Procédé selon la revendication 7, dans lequel le rapport en poids d'éther de cellulose au matériau routier meuble (à l'exclusion de l'eau) est d'au moins 0,2 pour cent.

**9.** Procédé selon la revendication 7, dans lequel le rapport en poids d'éther de cellulose au matériau routier meuble (à l'exclusion de l'eau) est d'au plus 2 pour cent.

**10.** Procédé selon la revendication 1, dans lequel le rapport en poids d'éther de cellulose à l'eau est d'au moins 1 pour cent.

**11.** Procédé selon la revendication 10, dans lequel le rapport en poids d'éther de cellulose à l'eau est d'au plus 15 pour cent.

**12.** Procédé selon la revendication 1, dans lequel l'éther de cellulose est choisi dans le groupe constitué d'hydroxyéthylméthylcellulose et d'hydroxypropylméthylcellulose.

**13.** Procédé selon la revendication 1, dans lequel, après compactage, le matériau routier présente une limite d'élasticité qui est au moins 10 pour cent supérieure à la limite d'élasticité d'un matériau routier compacté de manière similaire sans éther de cellulose.

**14.** Procédé selon la revendication 1, dans lequel, après compactage, le matériau routier présente un angle de frottement interne linéarisé inférieur à 35°.

**15.** Route comprenant une couche de sol ou de granulats, appelée « matériau routier », qui contient au moins 0,025 % en poids d'un éther de cellulose non ionique hydrosoluble, sur la base du poids de solides dans la couche de matériau routier, à l'exclusion de l'eau.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2013074296 A1
- JP S53145312 A
- US 2006128838 A1
- US 4845206 A


### Non-patent literature cited in the description


- Gravel Roads Construction and Maintenance Guide (August 2015). FHWA Publication
- Dirt and Gravel Road Best Management Practices (2019). Culpeper Soil and Water Conservation District of Culpeper
- **HARIKA K et al.** Basic Concepts of Cellulose Polymers- A Comprehensive Review.. *Archives of Pharmacy Practice*, 2012, vol. 3 (3), 202-216
- Zeisel method.. **G. BARTELMUS** ; **R. KETTERER**. Zeisel Cleavage procedure for determination of MS and DS. Springer, 1977, vol. 286, 161-190